# EUROPEAN PATENT APPLICATION

(11) **EP 2 750 348 A1**
(43) Date of publication of application: **02.07.2014**
(21) Application number: 12199422.2
(22) Date of filing: 27.12.2012
(51) Int. Cl.: H04L 29/06

(54) **A login recovery system**

(71) Applicant: Koninklijke KPN N.V., 2516 CK The Hague (NL)
(72) Inventor: van Steenbergen, Ate, 9737 NN Groningen (NL); Alberts, Albert, 9723 AJ Groningen (NL)
(74) Representative: Wuyts, Koenraad Maria

(57) **Abstract**

A login recovery system (100) for a digital service comprising
- a login-unit (120) configured to grant an electronic client device (110) access to the digital service over a digital network, the login-unit being configured to
- receive over the digital network, from the client device, one or more digital log-in messages (112), the one or more log-in messages comprising a login-identifier, a device-identifier, and login-credentials, , and configured to
- match the received login credentials with stored valid login-credentials (130), the login-unit requiring a successful match between the received login credentials and the valid login-credentials before granting the access, and
- a login recovery unit (160) for providing new login credentials to the client device in case of an unsuccessful match between the received login credentials and the valid login-credentials, the login recovery unit comprising
- a device-identifier verifier (150) configured to
- retrieve a known device-identifier associated with the received login-identifier from a database system (140, 142) storing associations between login-identifiers and known device-identifiers, and configured to
- match the retrieved device-identifier with the received device-identifier,
- the login recovery unit requiring a successful match between the retrieved device-identifier and the received device-identifier before providing the new login credentials to the client device.

## Description

### FIELD OF THE INVENTION

The invention relates to a login recovery system for a digital service comprising a login-unit configured to grant an electronic client device access to the digital service over a digital network, the login-unit being configured to receive over the digital network, from the client device, one or more digital log-in messages, the one or more log-in messages comprising a login-identifier and login-credentials, and configured to match the received login credentials with stored valid login-credentials, the login-unit requiring a successful match between the received login credentials and the valid login-credentials before granting the access.

### BACKGROUND OF THE INVENTION

Many digital services are useable over a digital network. When such a digital service is account based, then typically a login unit is used to grant an electronic client device access to the digital service over a digital network. The login-unit may be configured to receive over the digital network, from the client device, one or more digital log-in messages, the one or more log-in messages comprising a login-identifier and login-credentials, and configured to match the received login credentials with stored valid login-credentials. If there is a match, the access is granted.

For example, consider a digital email service. The email is stored by an email server in a mailbox. A user has the option to retrieve messages from the mailbox with an email client. The mailbox may implemented as a file, directory, storage system, database, etc. The email client may use a retrieval protocol. Popular protocols to retrieve messages are: Post Office Protocol (POP): a client-server method that is suitable for reading messages from a client computer, wherein message are removed from the server mailbox after first retrieval; and Internet Message Access Protocol (IMAP): designed to retrieve messages but keeping master copies of messages on the server. Alternatively, the messages may be accessed through a Web-based client to retrieve messages from the server on behalf of the website user and display them to the user in a web browser. Regardless of whether a so-called retrieval protocol is used or a web interface, the user will be expected to authenticate himself using a login credentials, say a password.

Digital services, including the exemplifying mail service noted above, are frequently under digital attack. Using a variety of digital means, the attackers try to gain unauthorized access to the service. Due to the complexity of the large scale systems such attacks occasionally succeed even when the operator applied all due care to keep his system up to date and protected. This means that in some circumstance an operator of a digital service must face the situation in which, potentially, a large number of accounts are compromised. Worse still, the operator may not even know with certainty which account information has been obtained by attacker and which has not. This means that the operator may have to update login credentials for potentially many persons. At the same time attackers, wherever they may be, connected to the same digital network, may try to use the same recovery mechanism to obtain login credentials for themselves or to hijack those of legitimate users.

### SUMMARY OF THE INVENTION

Known systems for recovering login capabilities are insufficient, especially in light of large scale attacks. When many accounts were compromised it would be an advantage to keep attackers out of recovery while at the same time streamlining the recovery procedure for legitimate users. Preferably, the system works automated as much as possible.

A login recovery system for a digital service is provided. The login recovery system comprises a login-unit grant an electronic client device access to the digital service over a digital network and a login recovery unit to for providing new login credentials to the client device.

The login-unit is configured to receive over the digital network, from the client device, one or more digital log-in messages; for example the login-unit comprises a receiver for the receiving. The one or more log-in messages comprise a login-identifier, a device-identifier, and login-credentials. The device-identifier may have been previously assigned to the client device. The login-unit is further configured to match the received login credentials with stored valid login-credentials; for example the login-unit comprises a login-verifier for the matching. The login-unit requires a successful match between the received login credentials and the valid login-credentials before granting the access.

The login recovery unit is configured for providing new login credentials to the client device in case of an unsuccessful match between the received login credentials and the valid login-credentials. The login recovery unit comprises a device-identifier verifier configured to retrieve a known device-identifier associated with the received login-identifier from a database system storing associations between login-identifiers and known device-identifiers; for example the device-identifier verifier comprises a retriever for the retrieving.

The device-identifier verifier is configured to match the retrieved device-identifier with the received device-identifier; for example the device-identifier verifier comprises a device-identifier matcher for the matching. The login recovery unit requires a successful match between the retrieved device-identifier and the received device-identifier before providing the new login credentials to the client device.

Usual access to the digital services is provided by the login-identifier and login-credentials. Sending a corresponding pair of login-identifier and login-credentials to the login-unit will grant access to the service, or be part of the granting operation. Interestingly, the message or messages that contain the login-identifier and login-credentials also contain a device identifier that was assigned to the device, possibly as part of the protocol to connect the client device to the network, which is needed before the network, and thus the digital service may be used. There is not necessarily a link between the device used to connect to the digital service and the account, so it may happen that a legitimate user connects to the service from a variety of devices, and/or locations. And consequently a variety of device identifiers may occur in the one or more messages. For this reason, it is not preferred to make such device identifiers part of the login procedure since it would severely restrict mobility of the user.

Interestingly however, the inventors have found that such device identifiers may be used in recovery situations. For example, consider the situation in which one or more accounts, including the account associated with the login-identifier used by the client device, in response to which an operator of the digital service has changed the associated login credentials. Changing or resetting login credentials has the beneficial effect of keeping unauthorized attackers out, yet has as a consequence that regular user can no longer access their account. The same situation may arise if the user forgot or misplaced his login credentials, possibly as a result of crash or loss of an original client device.

For situations, in which a user cannot log-in, recovery procedures are used. The system follows some routine in which the user is verified by other means and which results in providing new credentials. An example of such a recovery procedure is to ask so-called security questions to the user. But, in case of a severe hack such a recovery procedure will not work satisfactorily, since the answers to the security questions may have been disclosed as a result of the attack. However, the device will match the device identifier that was received with the login credentials and match it against a device identifier that is known to correspond to the device that owned or used or authorized by the account holder. Note, that just as with the security questions, it may be that this information leaks as a result of hack, but it is much harder for an attacker to use this information than, say, the answers to security questions. To use a device identifier in an attack an attacker must be able to spoof messages containing the correct device identifier, this implies that not only the digital service must be hacked but also the relevant part of the infrastructure that places the device identifiers in the messages. At the very least it will keep casual hacker from using leaked information.

A variety of digital services may be used over a message passing digital network in which device identifiers are included in the messages, or at least in the message for login. For example, the digital service may be digital content service, in which users may access digital content, say audio and/or video content. The service may require a subscription of the user. For example, the digital service may be digital information service, in which users gain access to information, in particular to actual information, say a stock information service. For example, the digital service may be a shop, in which physical product or sold or bought over the network. Also social media system comprising a login-in unit benefit from the login recovery.

The inventors have found that a particular advantageous application of the recovery system is for electronic message services, in particular electronic mail (e-mail). Message services typically operate through message retrieval protocols which make recovery through, say, security questions impossible. However, such a system does have the option to very device identifiers.

The digital network is typically the internet, but the digital network may also be a local area network, say using Ethernet, or a virtual private network, and the like.

The client device is typically a computer configured with network capabilities. For example, the client device may be a desktop computer. However, the recovery system may also be used when the client device is a phone, say a smart phone, a set-top box, and the like.

The data required for log-in may well be received in a single message, but may also be spread over multiple messages, i.e., one or more digital log-in messages. The messages need not be one-way. For example, the log-in messages may be part of a challenge-response protocol in which the login-unit sends a challenge and the client device responds to the challenge.

Some systems make a distinction between login-identifiers, i.e., the login-identifier associated with an account at the digital service, and usernames associated with network access itself, i.e., an account with an ISP, telecom provider and the like. Although, generally speaking there need not be a correspondence between the two, the inventors have found that the recovery system is even more secure when there is. The username could be an identifier, a number, a so-called User Principal Name (UPN), and the like. Likewise, the login-identifier could be a UPN, an email address, an inlog string, a number, and the like.

For example, the database system that stores associations between login-identifiers and known device-identifiers may use as an intermediary the username. For example, in an embodiment, the database system stores associations between login-identifiers and known device-identifiers by storing associations between one or more login-identifiers and a username, say in a first database, and storing associations between the username and the device identifier, say in a second database. For example, such a database may advantageously be used by an operator of the network who also operates the digital service, say an ISP or telco who offer, an electronic mail service (e.g. email) or electronic news service (say UseNet) to its users.

The login-identifier may be a name under which a user of the client device has an account at the digital service. For example, the login-identifier may be an e-mail address. The login-identifier may be the same as a username. The login-identifier is associated with login-credentials. The login-credentials received as the login-unit are matched with valid login-credentials that are stored. In a simple embodiment the login-identifier at the client device may be the same as the valid login-identifier, e.g., in case of a password. In this case the matching is a simply character wise comparison to verify that all characters of the received and valid login credentials are equal. However, in most embodiments that received and valid login credentials will not be equal, even though they match. For example, the valid login credential may be a hash of the received login credentials; the hash may be salted. In the latter case the matching comprising computing a hash of the received login credentials and comparing the hash of the received credentials with the valid login credentials. For example, the valid login credentials may be a shared secret, matching uses a challenge response protocol. In this case the received login credentials are a computed response, which is computed with the same shared secret on the client device and using the response. Such challenge response protocols may be more advanced, say, the Guillon-Quisquater protocol. The matching thus follows the particular choice for received and valid login credentials that is used.

The system may comprise a database with stored valid login credentials, e.g., indexed by login-identifier to retrieve the valid login credentials. The database may be managed through a login database manager.

Providing new login credentials may be done in a variety of ways. In a simple embodiment, the new credentials are sent using some communication channel. For example, if passwords are used, a new, say, random password may be selected, sent to the client device, or to the user of the client device, and stored, say, in the login credentials database. There are other possibilities. For example, the user may be directed to means for setting a new password, say a webpage accessible over http or https. The page may present an input box allowing the user to enter a new password.

The device identifier may be an IP address or a MAC address, and the like; especially if the network is IP based. In general the device identifier is assigned to the client device during some stage before the login attempt. This may be when the client device is manufactured, or configured, say in the case of a MAC address, or a fixed or semi-fixed IP address. The assigning may also be during a connection process, say of the device to the network; for example the client device may be assigned an IP address, this may be fixed, this may be dynamic. Assigning an IP address may be done by a DHCP server. Preferably, the received device identifier represents one single device, namely the client device. However, say in the case of an IP address, the device identifier may represent a home network. There is a relation between the device address and some (preferably) geographic, or logic, limitation. A DHCP server may assign an IP address to the client device based on a received MAC address.

The client device may be an ADSL router or modem, e.g., for a home network, which may be behind that router. Multiple end-devices may be used each with their own MAC address but sharing the same internet connection and the same IP address to the internet.

For example, Ethernet may be established over a DSL line between a DSLAM, say at the telecom provider, and an ADSL model, say at a home of the user. In order to authenticate, the ADSL modem sends a PPPoE message, so that the DHCP can assign an IP address. So in this embodiment, first Ethernet is established and next a TCP/IP connection is established.

PPPoE relies on two widely accepted standards: PPP and Ethernet. PPPoE is a specification for connecting the users on an Ethernet to the Internet through a common broadband medium, such as a single DSL line, wireless device or cable modem. A PPPoE Intermediate Agent (PPPoE IA) is deployed between a PPPoE server and PPPoE clients. It helps the PPPoE server identify and authenticate clients by using a vendor-specific tag to add subscriber line specific information to PPPoE discovery packets from clients before forwarding them to the PPPoE server. This tag is defined in RFC 2516. Similar to DHCP relay option82, some DSLAMs can insert line information into client PPPoE Discover Initialization (PODI) packets. This allows a PPPoE termination server to identify and authenticate a PPPoE client.

Assigning an IP address to a client device is thus done during establishing of the network connection, first Ethernet is established then an IP address is assigned on the basis of a credential in the modem. The relation between the assigned IP and the credential may be stored in a database; from the credential a username or login-identifier may be determined, possibly stored in the same database. In this manner an association between IP address and login-identifier or username is established. This association may be recorded in the database system either statically, e.g., for fixed IP addresses, or dynamically, e.g., upon every network connection that is established.

The device identifier could also be an International mobile subscriber identity (IMSI), configured in, e.g., stored in, telecommunication network SIM cards. The IMSI is a 64 bit field and is sent by a mobile phone to the network.

In an embodiment, the device identifier is an identifier, unique for the network, assigned to the client device, say configured in the client device or assigned dynamically before the client device participates in the computer network. In an embodiment, the client device is configured for establishing a connection with the network during which the client device is assigned a device identifier retrieved from the database system.

In an embodiment, the device identifier is configured in the client device and the one or more digital log-in messages comprise a further device-identifier. The further device-identifier is assigned to the client device during connecting of the client device to the digital network. The system comprises a server configured to maintain a database storing an association between the further device identifier assigned to the client device and the device identifier of the client device. The device-identifier verifier being further configured to verify that the received device identifier and received further device identifier are associated in said database. The login recovery unit further requiring an association between the received device identifier and received further device identifier. In an embodiment, the network is a TCP/IP network, the device identifier is a MAC address and the further device address is an IP address. The inventors found that verifying a device identifier that is assigned and verifying a device identifier that is configured in a device have complementary security advantages. A configured device identifier selects precisely a device, but may be more easily changed. The assigned device identifier is less precise but may be less easily changed.

In an embodiment, the login recovery system comprises a server configured to maintain a database storing an association between the IP address assigned to the client device and the MAC address of the client device, the device-identifier verifier being further configured to retrieve the assigned IP address associated with the MAC address, and configured to match the retrieved assigned IP address with an IP address received in the one or more login-messages, the login recovery unit further requiring a successful match between the retrieved assigned IP address and the received IP address. This has the advantage of providing an additional check, and thus increased security. Indeed, whereas a MAC address may with some effort be spoofed, this is much harder for the IP address, thus by having the possibility to verify both the MAC and IP address it becomes much harder to use the recovery system as an attack vector. The server may be a DHCP server, say the same DHCP server that assigned the IP address to the client device. In particular, if the DHCP server assigns IP addresses on the basis of MAC addresses such a database may already be available. Note that it is even possible that there is a fixed relation between MAC addresses and IP addresses. In the latter case, the database need not be maintained dynamically, but only if changes in configuration of devices or network are made. However, the relation may also be dynamic and potentially change upon each time the client device connects to the network.

In an embodiment, the login recovery system comprises a collection unit configured to receive from the login-unit the login-identifier and device-identifier received by the login-unit in the one or more log-in messages in case the login-verifier successfully matched the stored valid login-credentials with the login credentials received in the same one or more log-in messages, and to store, say by a storing unit, an association between the received login-identifier and device-identifier in a collection database, wherein the device-identifier verifier is configured to retrieve a known device-identifier associated with the received login-identifier from the collection database. This embodiment has the advantage, that no cooperation is needed from the ISP or network operator to obtain a known device-identifier associated with the received login-identifier. By collecting device identifiers with successful logins in the past a profile may be built for the account. For example, the collection unit may determine that the MAC address is the same in a certain percentage of logins, say more than 80%, or may determine that the IP address is the same in a certain percentage of logins, say more than 80%; in response the collection unit may determine to use the most used MAC address or the most used IP address respectively.

In an embodiment, the digital service is an electronic message service running on a digital message system, the message system being configured to maintain multiple message boxes associated with multiple login-identifiers respectively, a message box being configured to store messages intended for the login-identifier with which it is associated, the message service being accessible by the client device through a digital retrieval protocol to retrieve digital messages from the message box to the client device, the retrieval through the retrieval protocol requiring access granted by the login-unit including a successful match between the received login credentials and the valid login-credentials, wherein the message system is configured to maintain an additional message box different from said multiple message boxes, the login recovery unit being configured to provide the new login credentials to the client device by redirecting the retrieval protocol to the additional message box.

A problem, with message systems in which messages are retrieved through a retrieval protocol is that they do not offer the possibility to display messages to the user during the retrieval. Consider the following scenario, the valid login credentials no longer match, e.g., because of a password reset due to an attack on the system, or due to the user forgetting his password. In this case, one would like to instruct the user how to obtain new credentials, say a new password, however, it is not possible to, say, send the user a message since his system has been hacked. Allowing messages to pass through would imply that in essence anyone has access to the messages. This system gives an ingenious solution. Instead of allowing the user access to the messages, he is redirected to a different mail box, the additional mail box. In this way, the operator of the service can pass information to a user who did not manage to give correct login credentials. Such a message can be used for a variety of reasons. For example, the message may contain information, such as, instructions how to contact the help desk or how to properly configure his message program. However, the message may contain functional elements as well, as described below.

The digital message system may be a server or distributed across servers. The digital message system may also run the login recovery system.

Message boxes are known in the art per se, and the skilled person is familiar with different ways to implement them. For example, in some embodiments are message box is implemented as a folder on a file system. Message intended for the account associated with the login-identifier are placed in the folder, either in a single large file, or across multiple files. In another embodiment of message boxes, a message database system is used, the message database storing the messages together with the intended recipient, e.g., the login-identifier.

The digital retrieval protocol may be, e.g., POP3 or IMAP, etc. The digital retrieval protocol is preferably not the http protocol.

The additional message box may be implemented as any one of the other multiple message boxes. In the additional message box a message may be placed intended for a user who had a problem with his login credentials, in particular if he does have a match on his device identifier. The additional message box, may be the same for all login-identifiers, (the inventors refer to such a message box as a 'universal message box'). However there may also be an additional message box for each login-identifier, or say one additional message box for a group of login-identifiers. The recovery system is configured to redirect the recovery protocol to the additional message box. This has the effect that the user does not receive messages from his own message box, since he redirected away from it, but he does get any messages placed in the additional message box. It is preferred to make the additional message box read-only, especially, if the message box is universal.

In an embodiment, the additional message box comprises a message, the message comprising a digital reference, the digital reference allowing the client device to connect to a login credentials provider over the network for establishing new login credentials at the login credentials provider. For example, the digital reference may be a URL referring the user over a different channel, say http or https, to a means, say a webpage, for receiving new login credentials. In an embodiment, the additional message box comprises a message comprising the new login credentials itself.

The additional mail box system may also be used if the login recovery system fails to establish a match on the device identifier. In this case, there is less confidence that the connecting user is not an attacker, so more care is needed. However, a message may be provided that instructs how to regain access. For example, the message may instruct a user to try again at the computer or location that is usually used for access, since this may cause the device identifier in his messages to match the known device identifiers. In an embodiment, the message system is configured to maintain an further additional message box different from said multiple message boxes and different from the additional message box, the login recovery unit being configured to redirecting the retrieval protocol to the further additional message box in case of an unsuccessful match between the retrieved device-identifier and the received device-identifier.

Interestingly, the message service, say a mail service, may be accessible in two different ways, through a web interface, say using the http or https protocol, and through a retrieval protocol. If the user connects through a web interface there is less of a problem, since information may be presented to the user directly. In that case there is no need to go through an additional message box, it is stressed however that redirecting to the additional message box is possible, and will even to some extent simplify the system. In an embodiment, the message service is further accessible by the client device as a web service allowing viewing of messages in the message box, the web service requiring access granted by the login-unit including a successful match between the received login credentials and the valid login-credentials, the login recovery unit being configured to provide the new login credentials to the client device by redirecting the web service to a login credentials provider implemented as a web service for establishing new login credentials at the login credentials provider

The inventors have realized that for message systems this mode of providing new login credentials is so advantageous that it would even be of advantage in situation in which matching of device identifiers is not possible or convenient. An embodiment, of this type is the following: An electronic message service running on a digital message system, the message system being configured to maintain multiple message boxes associated with multiple login-identifiers respectively, a message box being configured to store messages intended for the login-identifier with which it is associated, the message service being accessible by a client device through a digital retrieval protocol to retrieve digital messages from the message box to the client device, the message system comprising a login-unit configured to grant the electronic client device access to the message service over a digital network, the login-unit being configured to receive over the digital network, from the client device, one or more digital log-in messages, the one or more log-in messages comprising a login-identifier, and login-credentials, to match the received login credentials with stored valid login-credentials, the login-unit requiring a successful match between the received login credentials and the valid login-credentials before granting the access, the retrieval through the retrieval protocol requiring access granted by the login-unit including a successful match between the received login credentials and the valid login-credentials, wherein the message system is configured to maintain an additional message box different from said multiple message boxes, and a login recovery unit configured to redirect the retrieval protocol to the additional message box; the additional message box may be used to provide new login credentials to the client device. The improvements described herein, not related to the device identifier may be directly applied to such a message system

A further aspect of the invention concerns a login recovery method for a digital service comprising granting an electronic client device access to the digital service over a digital network, the granting comprising receiving over the digital network, from the client device, one or more digital log-in messages, the one or more log-in messages comprising a login-identifier, a device-identifier, and login-credentials, the device-identifier being previously assigned to the client device, and matching the received login credentials with stored valid login-credentials, a successful match being required between the received login credentials and the valid login-credentials before granting the access, and the login recovery method further comprising providing new login credentials to the client device in case of an unsuccessful match between the received login credentials and the valid login-credentials, the providing comprising retrieving a known device-identifier associated with the received login-identifier from a database system storing associations between login-identifiers and known device-identifiers, matching the retrieved device-identifier with the received device-identifier, a successful match being required between the retrieved device-identifier and the received device-identifier before providing the new login credentials to the client device.

The login recovery system is an electronic system; it may run on one or more computers. The client device is also an electronic system, say, a computer, say a desktop computer, or a mobile phone, or table, or set-top box, and the like.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer

In a preferred embodiment, the computer program comprises computer program code means adapted to perform all the steps of a method according to the invention when the computer program is run on a computer. Preferably, the computer program is embodied on a computer readable medium.

### BRIEF DESCRIPTION OF THE DRAWINGS

These and other aspects of the invention are apparent from and will be elucidated with reference to the embodiments described hereinafter. In the drawings,
Figure 1 is schematic block diagram of a login recovery system 100;
Figure 2 is schematic block diagram of a login recovery system 200;
Figure 3 is schematic block diagram of a login recovery system 300;

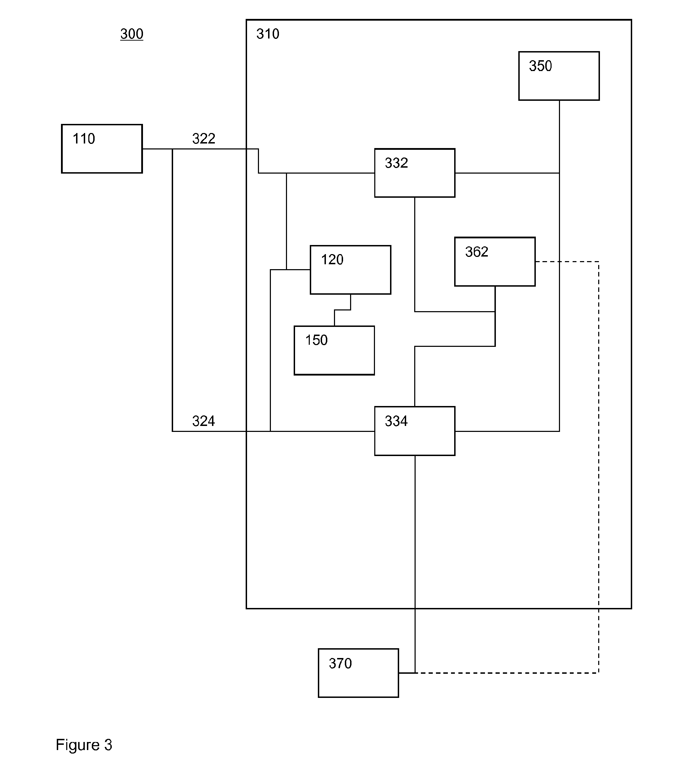

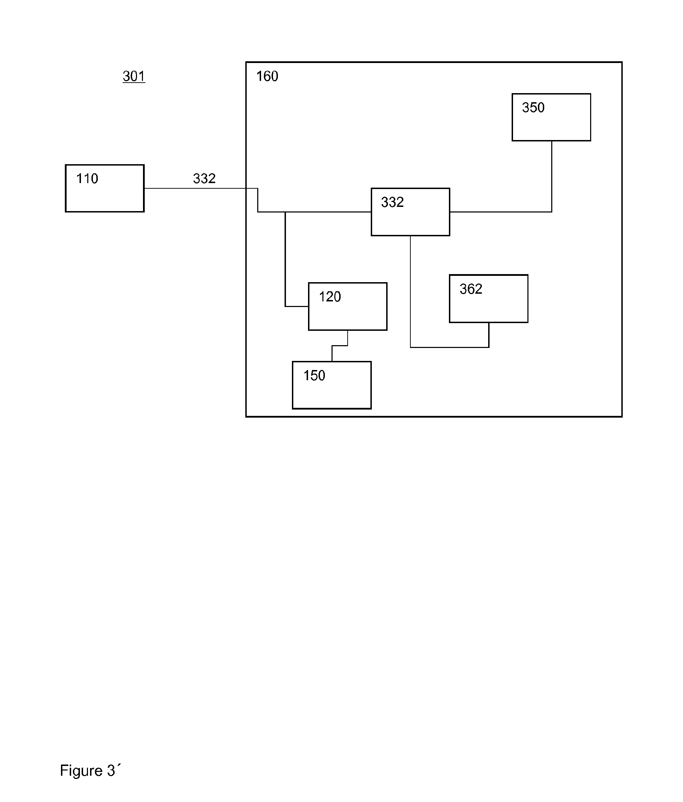

Figure 3' is schematic block diagram of a login recovery system 301;

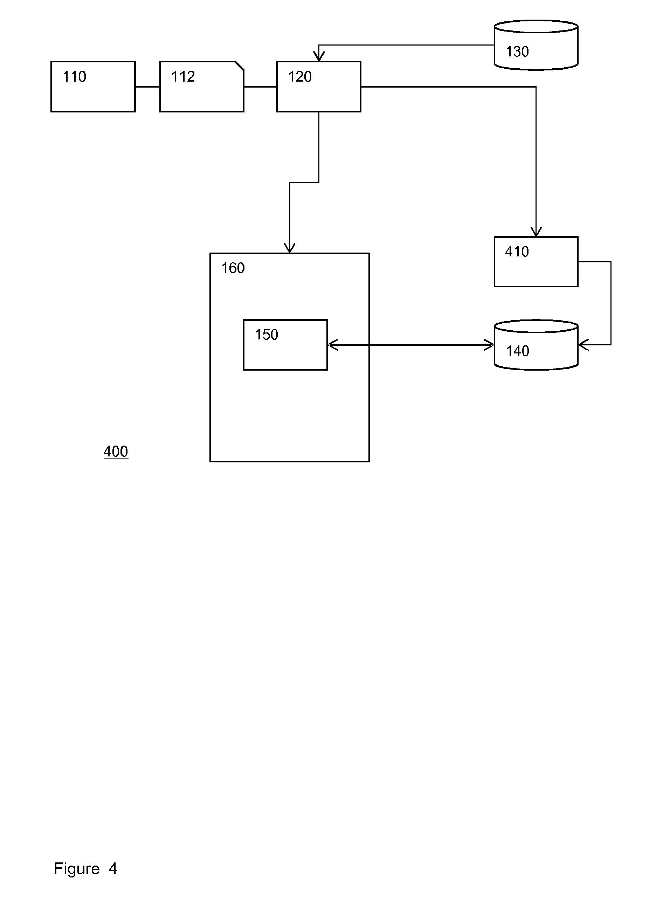

Figure 4 is schematic block diagram of a login recovery system 400;

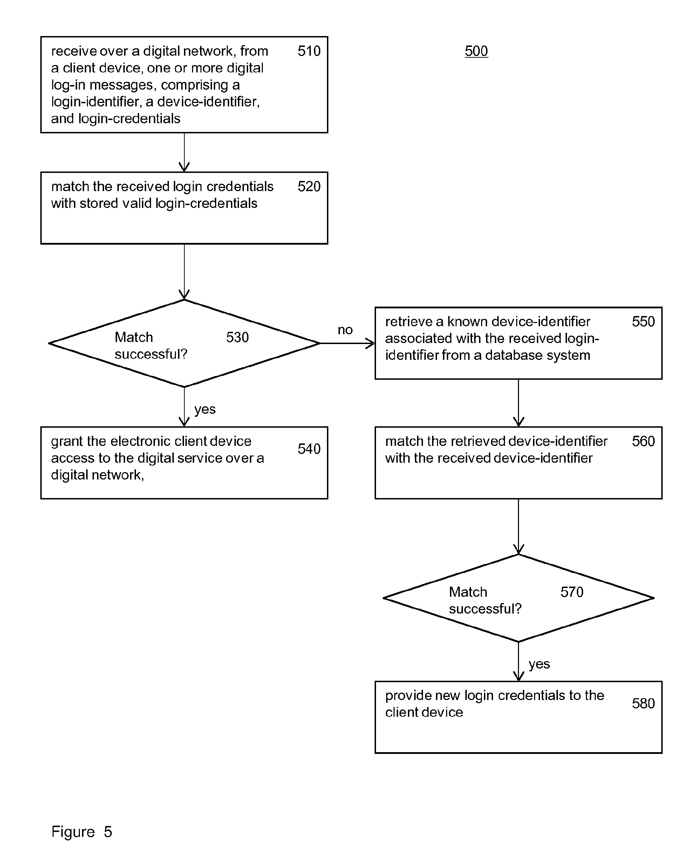

Figure 5 is a schematic flow chart of a method of login recovery 500.

It should be noted that items which have the same reference numbers in different Figures, have the same structural features and the same functions, or are the same signals. Where the function and/or structure of such an item has been explained, there is no necessity for repeated explanation thereof in the detailed description.

### List of Reference Numerals:

- 100, 200, 300: an login recovery system
- 301,400:
- 110: a client device
- 112: a login message

- 120: a login unit
- 130: a log in-identifier/password database
- 135: a username/password manager
- 140: a login-identifier/username database
- 142: a username/device address database
- 150: a device-identifier verifier
- 160: a login recovery unit
- 210: a DHCP server
- 220: an IP/MAC database
- 310: a message system
- 322: a retrieval protocol connection
- 324: a web protocol connection
- 332: a retrieval interface
- 334: a web interface
- 350: a message box
- 362: an additional message box
- 370: a login credentials provider
- 410: a collection unit

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

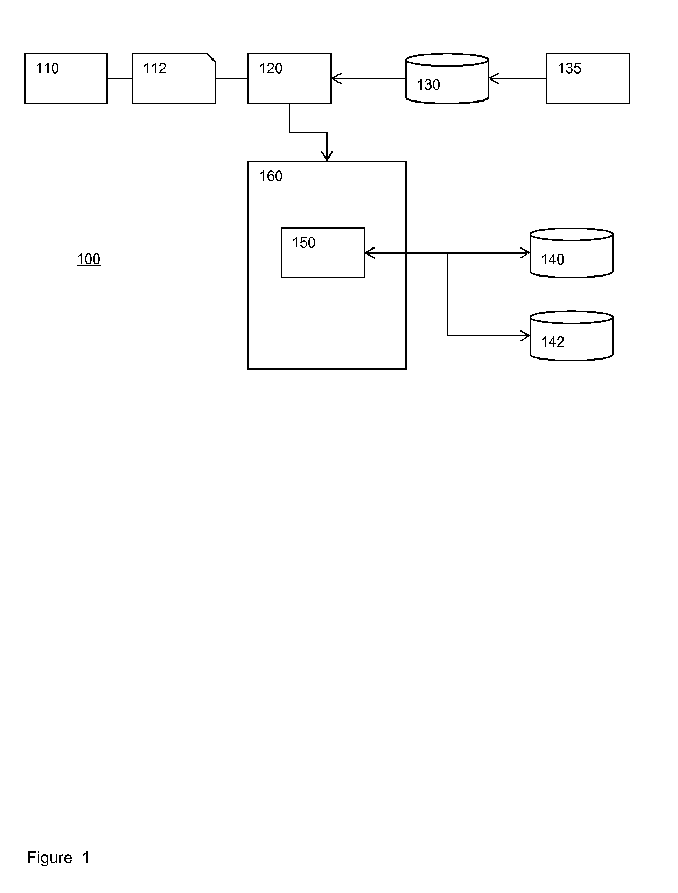

**Figure 1** illustrates in a schematic block diagram a login recovery system 100.

Login recovery system 100 comprises a login unit 120 and a login recovery unit 160.

Login unit 120 grants access to the client devices so that they can access a digital service. The digital service itself is not shown in Figure1. For example, the digital service may run on a computer and connect to the client device over a network. The digital service is also connected to login unit 120, e.g., over the network or directly; indeed login unit 120 may be comprised in the same computer or system that runs the digital service.

Login unit 120 is shown connected with a client device 110. Client device 110 is shown sending a login message 112 over the digital network to login unit 120. Login message 112 comprises a login-identifier, a device-identifier, and login-credentials, the device-identifier being previously assigned to the client device.

For example, the digital network may be an IP or TCP/IP network. Packets over such a network comprise an IP address and a MAC address; either one can be used as the device identifier. An IP address has the advantage that it is harder to spoof, since replacing the number will disturb the routing of messages over the network. MAC addresses have the advantage that they are directly associated with a particular device, and do not typically change. MAC addresses have the disadvantage that an attacker may try to change his MAC address. This is unfortunate, but it is still considered much preferable to necessitate an attacker to take this additional step than not to, since it will keep out so-called casual attackers. Moreover, steps may be taken to avoid MAC addresses to fall in the hands of attackers, so that they do not know how to modify MAC addresses (for example MAC addresses may be stored in hashed form, possibly including a salt in the database system, so that even if the attacker gains access the information is only useful for verifying not for modifying).

We will assume for simplicity the login recovery system 100 uses passwords on the side of the client device 110, so that, for example, login message 112 may contain a password as received login credential, and login-identifier/password database 130 contains hashes of the password as valid login credentials. The matching comprises hashing the received password and verifying that it is the same as the stored hash. Sha-256 is a suitable hash (also for hashing known device identifiers). However, it is noted that many types of received/valid login credentials are possible, say challenge-response type, etc. The login credentials may even include biometric authentication.

Login unit 120 is configured to match the received login credentials with stored valid login-credentials. Login recovery system 100 comprises a login-identifier/password database 130 managed by a username/password manager 135. For example, login unit 120 may retrieve the valid login credentials from login-identifier/password database 130, say, indexed by the received login-identifier. Username/password manager 135 may be used to add or change login-identifiers and/or login credentials. For example, username/password manager 135 may be used when a user changes his password, or when an account for the digital service is added or modified.

Login unit 120 requires a successful match between the received login credentials and the valid login-credentials before granting the access; often the match will be the only requirement. In case login unit 120 does not obtain a successful match, login unit 120 signals login recovery unit 160 start a recovery.

Login recovery unit 160 comprises or is associated with means to send new credentials, say a login credentials provider. For example, those means may be a web page indicting where or how to obtain new credentials. However, login recovery unit 160 may also provide the credentials themselves, or the means of providing may be to allow a user to set his own credentials. Setting or receiving credentials may be implemented as a web page, or as an executable or a service running over the digital network, etc.

Login recovery unit 160 comprises a device-identifier verifier 150. Device-identifier verifier 150 is configured to retrieve a known device-identifier associated with the received login-identifier from a database system. The database system may be implemented in a number of ways. For example, in login recovery system 100 the following possibility is used: the database system comprises a login-identifier/username database 140 and a username/device identifier database 142. An association between login-identifier and IP and/or MAC address is made by first finding an associated username and then associating the username to the device identifier. Username/device address database 142 may be a username/IP address database and/or a username/MAC address. Using two databases, 140 and 142, as here, has the advantage that a single customer, (associated with the username) may have multiple accounts. For example, a single household (username) may have multiple accounts, say mail accounts, one for each member of the household; the latter are associated with login-identifiers. However, it is also possible to use login-identifiers only, in which case the usernames and the login-identifiers are the same and only a login-identifier/device identifier database is needed.

Login-identifier/username database 140 stores the associations between login-identifiers and usernames, this database may be filled with static information or nearly static, say based on accounting information. Username/device address database 142 stores the association between the username and the device address. Username/device address database 142 may be maintained by the system that arranged access of client device 110 to the network, say an ADSL access system, a cable access system and the like.

Device-identifier verifier 150 is further configured to match the retrieved device-identifier with the received device-identifier. In some embodiments, this will be a straight, i.e., letter-for-letter, comparison. However, as noted different forms of matching are possible, to allow storing the device identifiers are hashes.

If device-identifier verifier 150 establishes a successful match, it is known that the connection is made from a usual location in the network or a usual device. This is especially useful in case there have been large attacks on the network. Such a large attack may compromise many accounts, and require the reset of many login credentials. However, with a match on device identifier, a user has to be at a certain location or use a certain device in order to regain access. Although an attacker could perform attacks on many accounts from a single place, he cannot perform many attacks on many accounts from many different places. Thus the security, especially for average users, has increased.

Login recovery unit 160 requires a successful match between the retrieved device-identifier and the received device-identifier before providing the new login credentials to the client device. Login recovery unit 160 may require more, say, a response to security questions etc.

To provide new credentials, login recovery unit 160 has many options, say send a message to client device 120 using any available channel. For example login recovery unit 160 may send an SMS, to the user of the client device. For this purpose login recovery system 100 may comprise a username/telephone number database, storing associations between usernames and telephone numbers. Login recovery unit 160 may retrieve the telephone numbers from the database, using the username as index. Instead of username, login identifier may be used. Instead of SMS an audio record may be played. This database is especially convenient in case client device 110 is a mobile phone, since in this case the telephone message will arrive at the same place where the credentials are needed.

Resetting of login credentials, in particular of multiple login credentials may be done as follows. It is preferred not to reset the login credential itself, say password itself, nor of blocking the account (which may e.g. be done for some defaulting on his payments for the service). Database 130 may maintain an attribute to keep track of the reset status of the account, i.e., of the login credentials. For example, the attribute may be stored per user either in a separate field in, say, database 130, or in a separate database. The attributed indicates if the account has been 'reset' for security-breach reasons. For reset of multiple accounts, even for a system-wide password reset, only the multiple attributes need to be modified to the state indicating 'breached' status. After the password has been changed, the attribute may be changed back to a state indicating a normal state. Interestingly, the attribute may also be used to keep track of how many users have changed their password after the security breach and to avoid asking a user again to change his password even if he has already done so.

During operation, a user connects to a message based network. In the message a device identifier is comprised. If a login operation fails, the system verifies if the device identifier matches an expected device identifier, and if so, new credentials are provided.

Database login-identifier/password database 130 may mark certain accounts, e.g., login-identifiers with a flag. The flag indicates that the account has been compromised by an attacker. In that case, the device identifier match will be required *in addition* to the received login credentials matching the valid login credentials. The latter solution is not useful for persons who forgot their password, etc, but in case of a large attack it makes sure that the recovery is performed by someone who has access to the login credentials. This may include the original attackers, but it will typically not include the public at large. This means that the recovery system does not open new attack vectors to attackers unrelated to the first large attack. Later when the attack is under control the use of the flag may be discontinued so that the system may be used again for forgotten or lost credentials as well.

Typically, login unit 120 and login recovery unit 160 are implemented on a server or on multiple servers. The server(s) comprise a microprocessor (not shown) which executes appropriate software stored at the server, e.g., the software may have been downloaded and stored in a corresponding memory, e.g. RAM (not shown). Client device 110 may also be equipped with microprocessors and memories (not shown). Databases login-identifier/password database 130, login-identifier/username database 140, username/device address database 142 may be comprised in storage, say memory, or magnetic storage, comprised in the one or more servers.

In one example application the client device works together with a network access device, such as an ADSL modem. An ADSL modem is placed at a location, say at a home. The modem is assigned an IP address from the network; this may be done on the basis of DHCP or a Remote Authentication Dial In User Service (RADIUS) server. Client devices receive from the DHCP server in the ADSL-modem a so-called non-routable IP address; such an address will not be routed over the Internet. The IP address of a client device is not visible on the Internet. Instead the client device receives the IP address from the ADSL modem. The ADSL modem receives messages (signals) from the network and forward the messages to the internal IP address of the client device. Nevertheless, even in these situations one could allow the use of the device IP address as a device-identifier, although this would incur the disadvantage that there is some loss in device resolution. If needed, one could improve upon IP addresses as device-identifier by using MAC addresses in addition (or instead), or by asking additional security questions. Furthermore, if the IP address is known to belong to the user, e.g., by keeping track of IP addresses during the connection with the network, the resolution loss is limited to devices in the same house hold. In light of other security problems (breaches) one may be prepared to accept that risk.

A similar situation exists with network proxy's. Client device addresses behind the proxy are not visible; those client devices will share the IP address of the proxy on the Internet.

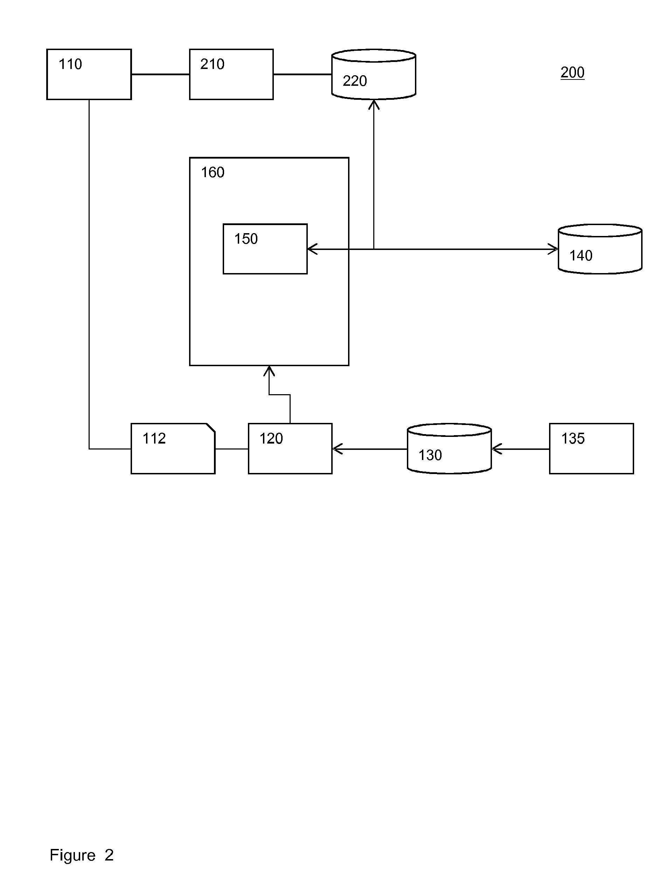

**Figure 2** illustrates in a schematic block diagram a login recovery system 200, which is a variation on system 100. Login recovery system 200 comprises a DHCP server 210 and an IP/MAC database 220. DHCP server 210 has been configured to allocate an IP address based on a table with MAC address/IP address pairs. Only client devices with a MAC address listed in this table will be allocated an IP address. The table is stored in database 220.

When client device 110 connects to the network, client device 110 and DHCP server 210 together execute the DHCP protocol, during which client device 110 sends his MAC address and DHCP server 210 assigns the corresponding IP address. After this protocol, client device 110 can participate in IP traffic since it has an IP address.

When at some point the verification of login recovery unit 160 starts, in the situations mentioned above, login recovery unit 160 can make a stronger assessment. Device-identifier verifier 150 first retrieves a username associated with the received login-identifier. Then device-identifier verifier 150 obtains the MAC or IP address that is known for that username. Device-identifier verifier 150 may make use of username/device address database 142, but the username may also be kept in IP/MAC database 220. Next device-identifier verifier 150 obtains from IP/MAC database 220 the IP address or MAC address. For example, in an embodiment, login-identifier/username database 140 stores associations between login-identifier and username, and IP/MAC database 220 stores associations between username, MAC address and IP address.

Next device-identifier verifier 150 matches two device identifiers; in this case, it matches the MAC address and the IP address. This is even stronger than verifying only one address, since IP addresses are hard to spoof, yet MAC addresses are more precise. By verifying both, more confidence is obtained that the connecting client device is in fact the client device belonging to an authorized user of the digital system instead of an attacker of the system.

**Figure 3** illustrates in a schematic block diagram a login recovery system 300 for a message system 310.

Message system 310 runs an electronic message service. A particular advantageous choice for the message system is, e.g., an electronic mail (e-mail) system. The system may also be a video messaging service, in which audio/video messages are kept for a particular account for later retrieval, etc. The system may also be an electronic wishing cards system, for providing electronic wishing cards to users. Although advantageous, it is not necessary to use to the usual e-mail infrastructure instead proprietary protocols may be used.

Message system 310 comprises multiple message boxes. The system has multiple accounts, associated with the login-identifiers. In a message box, messages are kept which the service obtained for that particular login-identifier. Messages may be obtained from a third party. However, the system may also be an information service, in which case a message may originate say from message system 310 itself. Different message boxes are accessible through different login-identifiers. In Figure 3, one such message box, message box 350, is shown. The login-identifier may be an e-mail address, possibly the email address associated with the account itself.

A message box may simply be a file in a file system. It may be a folder in a file system, but the message box may also be implemented in a database. In the latter case the message box of a user are all record associated with the login-identifier.

Message system 310 offers two different ways for the user to obtain access to the messages in message box 350. Message system 310 comprises a retrieval interface 332 and a web interface 334. To use the retrieval interface 332, client device 110 connects through a retrieval protocol connection 322. To use the web interface 334, the user connects through a web protocol connection 324. For example, retrieval protocol connection 322 and retrieval interface 332 may use POP, such as POP3 or IMAP. For example, web protocol connection 324 and web interface 334 use http or https. Note that retrieval protocol connection 322 and web protocol connection 324 logically connect to different ports. Using retrieval interface 332 has the effect of retrieving messages from message system 310 to client device 110 without direct user intervention. Using web interface 334 the user is presented with an interface in his web browser.

Typically, the retrieval protocol starts automated retrieval of all new messages in the message box, whereas the web interface presents an interface showing available messages after which the user may select a message for viewing.

In general using retrieval interface 332 is more efficient for message retrieval. It reduces dependency on having a connection and reduces the time online. However, for the operator retrieval interface 332 has the problem that it cannot present the user with information; especially, if the login credentials do not match, (otherwise the operator may send a message to the message box). Indeed, if the client device 110 connects through web protocol connection 324 but has non-matching login credentials, the operator could present the user with an informative screen that explains that his password has been reset and instructs the user how to obtain new credentials, say it provides a URL or an input box for setting new credentials (in the latter case a device identifier check is preferred). The URL may be to a login credentials provider 370. However, in case retrieval interface 332 is used, the operator has no opportunity to provide an informative screen since the retrieval proceeds without direct intervention of the user. In case of unmatched credentials, message box 350 is not accessed and the protocol is terminated.

Message system 310 comprises an additional message box 362. Additional message box 362 contains a message, say placed there by the operator message system 310. The message may contain a digital reference, say a URL, allowing the client device to connect to a login credentials provider 370 over the network for establishing new login credentials at the login credentials provider. The message may contain an executable for configuring the client device to obtain the new credentials. Preferably, the executable is signed by the operator using a private key corresponding to a certificate in passion of possession of client device 110 so that the origin of the executable may be verified. Such a digital signature could also be applied in the same way to message itself.

Additional message box 362 may be the same for multiple or even all accounts of message system 310. However, it is also possible to make an additional message box for all accounts, or most, say for each account of the multiple accounts an additional account is made. In this way, the message may be personalized, and may even contain the personalized information itself.

It is noted that message system 310 contains a login-unit 120 and device-identifier verifier 150. Access to message box 350, either through retrieval interface 332 or web interface 334 requires a grant of access by login unit 120, including matching login credentials. Redirection is in dependency on a match in device identifier. Message system 310 redirects the retrieval protocol to the additional message box in case the match for the login unit fails yet the match for device-identifier verifier 150 succeeds. However, it is noted that the advantageous effect of redirecting in case of unmatching login credentials may also be used without matching device identifiers. This will still have the beneficial effect of providing a way to give information to users who use retrieval protocols instead of web access. The latter may be done by redirecting the retrieval protocol and/or web access to a further additional message box (not separately shown).

During operation, client device 110 connects to message system 310 with a login message containing a device identifier. If the connection is at retrieval interface 332, and the login-credentials match, message system 310 proceeds with sending messages from message box 350 to client device 110 for retrieval; if the login-credentials do not match, message system 310 redirects to additional message box 362 and proceeds with sending messages from additional message box 362 to client device 110 for retrieval.

If the connection is at web interface 334, and the login-credentials match, message system 310 proceeds with presenting client device 110 with a web interface to the messages in message box 350. Through the web interface the message may be accessed. If the login-credentials do not match, message system 310 has two options. First is to redirect to additional message box 362; in this case the web interface will be presented but with the messages in additional message box 362. The other option is redirect to a login credentials provider 370.

The message in additional message box 362 may contain a digital reference to login credentials provider 370 as indicated by a dashed line.

**Figure 3****'** illustrates in a schematic block diagram a login recovery system 301. Login recovery system 301 has been simplified in that it does not provide access through a web interface only through a retrieval protocol. In login recovery system 301, web protocol connection 324 and web interface 334 have been omitted.

Note that the variants illustrated in figures 1, 2, and 4 are useable in figures 3 and 3'.

Below a further embodiment is described in which a mobile number is known for the owner of the account, e.g., associated with a username. Consider the situation in which an attacker has compromised the digital service, e.g. mail service. It is unclear to which information the attacker gained access. As a precaution all login credentials are reset. The user attempts to login using POP or IMAP, but his fails because of the password reset. At message system 310 the login attempt is detected. The IP address from which the login was received corresponds to an IP address that is known for this user. It may be known that a particular IP address corresponds to a particular user because the operator of the network and of the digital service are the same, or are cooperating. The knowledge about IP addresses and usernames may be stored in a database (in this case also including the mobile number). The server then sends an SMS message saying that the password has been reset and that the user received a new password. The new password may be included in the SMS. The IP address is included in each network message. The IP address of a fixed line is assigned by the operator of the network and stored in a database. Using this database one can detect if the request came from the user, say from his home address.

**Figure 4** illustrates in a schematic block diagram a login recovery system 400, which is another variant of login recovery system 100. Login recovery system 400 comprises a collection unit 410.

The collection unit 410 is connected to login unit 120 and receives from login unit 120 the login-identifier received by the login-unit in the one or more log-in messages in case the login-verifier successfully matched the stored valid login-credentials with the login credentials received in the same one or more log-in messages. Collection unit 410 also obtains a device-identifier either directly from login unit 120 or from other messages received from client device 110 either at client device 110 or at other units of the digital service. Collection unit 410 stores the login-identifier and device identifiers used, say the MAC or IP address together, i.e., stores an association between them.

In the future when client device 110 fails to provide matching login credentials, the device identifiers that were used in the past may be received from database 140. It is assumed that a device that was used often used by a user earlier will be a device from which it is safe to accept a recovery action. If the recovery fails, the user may be instructed to retry at a location and/or device that he used previously.

**Figure 5** illustrates in a schematic flow chart a method of login recovery 500.

In step 510, one or more digital log-in messages are received over a digital network from a client device. The one or more messages comprise a login-identifier, a device-identifier, and login-credentials. The receiving may be done by a login-unit. In step 520, the received login credentials are matched with stored valid login-credentials. Step 520 may be performed by the login-unit. The valid login-credentials may be retrieved from a database. In step 530 it is decided if the matching was successful, i.e., if the matching allows granting of access to the digital service, say access to a message box. If so, the method continues with step 540, if not the method proceeds with step 550. In step 540, the electronic client device is granted access to the digital service over a digital network. In step 550, a known device-identifier associated with the received login-identifier is retrieved from a database system. The retrieval may be done by a device-identifier verifier 150. In step 560, the retrieved device-identifier is matched with the received device-identifier. Step 560 may be done by a device-identifier verifier 150. In step 570, it is decided if the matching was successful, i.e., if the matching allows providing of new login credentials to the client device. If in step 580 new login credentials are provided to the client device. Step 580 may be done by a login credentials provider.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 510 and 550 may be executed, at least partially, in parallel. Moreover, a given step may not have finished completely before a next step is started.

A method according to the invention may be executed using software, which comprises instructions for causing a processor system to perform method 500. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A login recovery system (100; 200; 300) for a digital service comprising
- a login-unit (120) configured to grant an electronic client device (110) access to the digital service over a digital network, the login-unit being configured to
- receive over the digital network, from the client device, one or more digital log-in messages (112), the one or more log-in messages comprising a login-identifier, a device-identifier, and login-credentials, and configured to
- match the received login credentials with stored valid login-credentials (130), the login-unit requiring a successful match between the received login credentials and the valid login-credentials before granting the access, and
- a login recovery unit (160) for providing new login credentials to the client device in case of an unsuccessful match between the received login credentials and the valid login-credentials, the login recovery unit comprising
- a device-identifier verifier (150) configured to
- retrieve a known device-identifier associated with the received login-identifier from a database system (140, 142) storing associations between login-identifiers and known device-identifiers, and configured to
- match the retrieved device-identifier with the received device-identifier,
- the login recovery unit requiring a successful match between the retrieved device-identifier and the received device-identifier before providing the new login credentials to the client device.

2. A login recovery system as in Claim 1, wherein the database system stores associations between login-identifiers and known device-identifiers by
- storing associations between one or more login-identifiers and a username (140) and,
- storing associations between the username and the device identifier (142).

3. A login recovery system as in any one of the preceding claims, wherein the client device is configured for establishing a connection with the network during which the client device is assigned the device identifier retrieved from the database system.

4. A login recovery system as in Claim 1, wherein the device identifier is a MAC address of the client device.

5. A login recovery system as in any one of the preceding claims wherein the device identifier is configured in the client device and the one or more digital log-in messages (112) comprise a further device-identifier, the further device-identifier being assigned to the client device during connecting of the client device to the digital network, the system comprising a server (210) configured to maintain a database (220) storing an association between the further device identifier assigned to the client device and the device identifier of the client device,
- the device-identifier verifier being further configured to verify that the received device identifier and received further device identifier are associated in the database (220) storing an association between the further device identifier assigned to the client device and the device identifier of the client device.
- the login recovery unit further requiring an association between the received device identifier and received further device identifier.

6. A login recovery system as in Claim 5, wherein the network is a TCP/IP network, the device identifier is a MAC address and the further device address is an IP address.

7. A login recovery system as in Claim 1, wherein the device identifier is an IP address of the client device.

8. A login recovery system as in Claim 1, comprising
- a collection unit (410) configured to
- receive from the login-unit the login-identifier and device-identifier received by the login-unit in the one or more log-in messages in case the login-verifier successfully matched the stored valid login-credentials with the login credentials received in the same one or more log-in messages, and to
- store an association between the received login-identifier and device-identifier in a collection database, wherein
- the device-identifier verifier is configured to retrieve a known device-identifier associated with the received login-identifier from the collection database.

9. A login recovery system as in Claim 1, wherein
- the digital service is an electronic message service running on a digital message system (310), the message system being configured to maintain multiple message boxes (350) associated with multiple login-identifiers respectively, a message box being configured to store messages intended for the login-identifier with which it is associated,
- the message service being accessible by the client device through a digital retrieval protocol (332) to retrieve digital messages from the message box to the client device, the retrieval through the retrieval protocol requiring access granted by the login-unit including a successful match between the received login credentials and the valid login-credentials, wherein
- the message system is configured to maintain an additional message box (362) different from said multiple message boxes, the login recovery unit being configured to provide the new login credentials to the client device by redirecting the retrieval protocol to the additional message box.

10. A login recovery system as in Claim 9, wherein the additional message box comprises a message, the message comprising
- a digital reference, the digital reference allowing the client device to connect to a login credentials provider (370) over the network for establishing new login credentials at the login credentials provider, or
- the new login credentials.

11. A login recovery system as in any one of Claims 9 and 10, wherein
- the message service is further accessible by the client device as a web service (334) allowing viewing of messages in the message box, the web service requiring access granted by the login-unit including a successful match between the received login credentials and the valid login-credentials
- the login recovery unit being configured to provide the new login credentials to the client device by redirecting the web service to a login credentials provider (370) implemented as a web service for establishing new login credentials at the login credentials provider

12. A login recovery system as in any one of Claims 9, 10, and 11, wherein
- the message system is configured to maintain an further additional message box different from said multiple message boxes and different from the additional message box, the login recovery unit being configured to redirecting the retrieval protocol to the further additional message box in case an unsuccessful match between the retrieved device-identifier and the received device-identifier.

13. A login recovery method for a digital service comprising
- granting an electronic client device (110) access to the digital service over a digital network, the granting comprising
- receiving over the digital network, from the client device, one or more digital log-in messages (112), the one or more log-in messages comprising a login-identifier, a device-identifier, and login-credentials, and
- matching the received login credentials with stored valid login-credentials (130), a successful match being required between the received login credentials and the valid login-credentials before granting the access, and the login recovery method further comprising
- providing new login credentials to the client device in case of an unsuccessful match between the received login credentials and the valid login-credentials, the providing comprising
- retrieving a known device-identifier associated with the received login-identifier from a database system (140, 142) storing associations between login-identifiers and known device-identifiers,
- matching the retrieved device-identifier with the received device-identifier, a successful match being required between the retrieved device-identifier and the received device-identifier before providing the new login credentials to the client device.

14. A computer program comprising computer program code means adapted to perform all the steps of claim 13 when the computer program is run on a computer.

15. A computer program as claimed in claim 14 embodied on a computer readable medium.
